(19) Europäisches Patentamt
European Patent Office
Office européen des brevets

(11) **EP 2 996 077 A1**

(12) **DEMANDE DE BREVET EUROPEEN**

(43) Date de publication:
**16.03.2016 Bulletin 2016/11**

(51) Int Cl.:
**G06Q 10/06** $^{(2012.01)}$

(21) Numéro de dépôt: **15184307.5**

(22) Date de dépôt: **08.09.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **09.09.2014 FR 1458448**

(71) Demandeur: **BULL SAS**
**78340 Les Clayes sous Bois (FR)**

(72) Inventeurs:
• DEMEILLIEZ, Bruno
38330 Montbonnot-Saint-Martin (FR)
• BAGNARD, Natacha
38100 Grenoble (FR)
• KERIBIN, Valérie
38100 Grenoble (FR)

(74) Mandataire: **Cabinet Camus Lebkiri**
**25, Rue de Maubeuge**
**75009 Paris (FR)**

(54) **PROCÉDÉ DE PRODUCTION AUTOMATISÉE D'UN DIAGRAMME D'ANALYSE D'UNE ACTIVITÉ DE TRAITEMENTS PLANIFIÉS**

(57) Procédé de production automatisée d'un diagramme d'analyse d'une activité de traitements planifiés caractérisé en ce qu'il comporte les étapes suivantes :
- sélection d'au moins un travail parmi des travaux d'au moins un planificateur de travaux selon au moins un critère relatif à au moins une métadonnée associée aux travaux ;
- définition d'une période d'analyse ;
- extraction de données de travail d'au moins un journal de travaux du au moins un planificateur de travaux selon la période définie et selon le au moins un travail sélectionné, une donnée de travail comportant au moins une date de début de travail et une date de fin de travail ;
- calcul de coordonnées d'affichage d'une représentation d'une donnée travail en fonction de sa date de début et de sa date de fin et, pour chacune desdites dates, selon un quotient d'une division entière d'un écart entre les dîtes dates et une date de référence par un nombre prédéterminé.

Fig. 2

**Description**

**DOMAINE TECHNIQUE DE L'INVENTION**

L'invention se rapporte à un procédé de production automatisée d'un diagramme d'analyse d'une activité de traitements planifiés.

On entendra par « une activité de traitements planifiés » dans le cadre du présent document une activité liée à des processus lancés par un outil usuellement désigné comme « planificateur de tâche » ou aussi « cron ». Un tel planificateur sert, par exemple, pour exécuter des travaux « en dehors des heures de bureau », c'est-à-dire des travaux traitant des données produites par des opérateurs humains, ces traitements se déroulant en l'absence desdits opérateurs. Cela permet une utilisation raisonnée du système. En effet, souvent ces traitements sont très consommateurs de ressources. Le fait de les exécuter en même temps que la saisie des données par des opérateurs risque de ne pas laisser assez de ressource disponible pour ladite saisie. On choisit donc de décaler les deux activités dans le temps : saisie par les opérateurs en journée, traitement des données produites hors journée.

**ETAT DE LA TECHNIQUE ANTERIEURE**

Dans le cadre de la gestion d'application, il faut souvent intervenir lors d'incidents en environnement de production. Il faut alors analyser ce qui s'est passé dans l'environnement production afin de déterminer la ou les origines du problème. Lorsqu'il s'agit d'un problème lié aux travaux planifiés, on ne dispose généralement que des informations brutes liées aux mécanismes de planification, aussi appelés mécanismes d'ordonnancement : la date et l'heure de départ, le temps d'exécution ou la date et l'heure d'arrêt des différents travaux planifiés.

Ces données brutes sont des fichiers textes particulièrement sibyllins. Ces fichiers sont d'autant plus sibyllins qu'ils comportent des données relatives à un grand nombre de travaux. En plus d'informations diverses sur ces travaux, ces fichier comportent des informations relatives à un état du planificateur gérant les travaux. Ces caractéristiques font qu'il est fastidieux, si ce n'est impossible, de tirer le moindre diagnostique de ces informations.

C'est pourtant ce que tentent les hommes du métier en utilisant des éditeurs de texte ou au mieux des tableurs.

Les temps d'analyse des incidents sont donc longs et les conclusions des analyses s'apparentent le plus souvent à des conjectures. Dans la pratique le problème est que les intervenants sont dans l'impossibilité d'exposer clairement le problème ayant causé l'incident et sont déduits à proposer des solutions passe partout comme : augmenter la puissance de tous les serveurs.

**EXPOSE DE L'INVENTION**

L'invention vise à remédier à tout ou partie des inconvénients de l'état de la technique identifiés ci-dessus, et notamment à proposer des moyens pour permettre une analyse pertinente et rapide des informations produites par l'environnement de production. Cette analyse est rendu rapide et pertinente par la production d'un diagramme permettant juxtaposition de données pertinentes. Des données pertinentes sont sélectionnées, parmi celles produites par les systèmes, selon des critères propres à l'invention.

Pour permettre de visualiser de manière efficace l'exécution des différents travaux planifiés et ainsi faciliter l'analyse de l'ordonnancement de ces travaux, l'invention génère des diagrammes, à partir de données brutes sélectionnées du système d'ordonnancement. L'invention permet de juxtaposer des représentations des données sélectionnée.

Avec l'invention, il est également possible de juxtaposer des données brutes sélectionnées avec des données de consommation de ressources d'un ou plusieurs serveurs. Cette juxtaposition permet d'analyser rapidement des liens de corrélation entre l'exécution des travaux planifiés et l'évolution des consommations de ressources de serveurs impliqués dans l'exécution desdits travaux.

Il est ainsi facile de mesurer des dérives dans les dates d'exécutions et de corréler ces dérives avec les consommations de ressources.

Dans ce dessein, un aspect de l'invention se rapporte à un procédé de production automatisée d'un diagramme d'analyse d'une activité de traitements planifiés caractérisé en ce qu'il comporte les étapes suivantes :

- sélection d'au moins un travail parmi des travaux d'au moins un planificateur de travaux selon au moins un.critère relatif à au moins une métadonnée associée aux travaux ;
- définition d'une période d'analyse ;
- extraction de données de travail d'au moins un journal de travaux du au moins un planificateur de travaux selon la période définie et selon le au moins un travail sélectionné, une donnée de travail comportant au moins une date de début de travail et une date de fin de travail ;

- calcul de coordonnées d'affichage d'une représentation d'une donnée travail en fonction de sa date de début et de sa date de fin et, pour chacune desdites dates, selon un quotient d'une division entière d'un écart entre les dîtes dates et une date de référence par un nombre prédéterminé.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles:

- une métadonnée d'un travail comporte un identifiant dudit travail ;
- une métadonnée d'un travail est une affinité avec une ressource matérielle d'un dispositif de traitement automatisé impliquée dans la mise en oeuvre du travail ;
- le procédé comporte également les étapes suivantes :

  - déploiement d'au moins une sonde ;
  - collecte des données selon au moins la sonde déployée :

    - production de données d'exploitation pas la ou les sondes déployées ;
    - enregistrement horodaté et associé à un identifiant de sonde des données produites ;

  - calcul de coordonnées d'affichage d'une représentation d'une donnée d'exploitation enregistrée selon la date de la donnée d'exploitation et un identifiant de sonde ;

- une sonde à déployer est choisie en fonction d'une métadonnée d'au moins un travail parmi le ou les travaux sélectionnés ;
- la donnée d'exploitation enregistrée utilisée pour le calcul des coordonnées d'affichage est sélectionnée en fonction d'une métadonnée d'au moins un travail parmi le ou les travaux sélectionnés ;

L'invention se rapporte également à un dispositif de stockage numérique comportant un fichier correspondant à des codes instructions mettant en oeuvre le procédé selon une combinaison des caractéristiques techniques précédentes.

L'invention se rapporte également à un dispositif mettant en oeuvre le procédé selon une combinaison des caractéristiques techniques précédentes.

**BREVE DESCRIPTION DES FIGURES**

D'autres caractéristiques et avantages de l'invention ressortiront à la lecture de la description qui suit, en référence aux figures annexées, qui illustrent :

- la figure 1 : une illustration de moyens pour la mise en oeuvre de l'invention ;
- la figure 2 : une illustration d'étapes du procédé selon l'invention ;
- la figure 3 : une illustration d'un diagramme produit par l'invention ;
- la figure 4 : une illustration d'un diagramme produit par l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

**DESCRIPTION DETAILLEE D'UN MODE DE REALISATION**

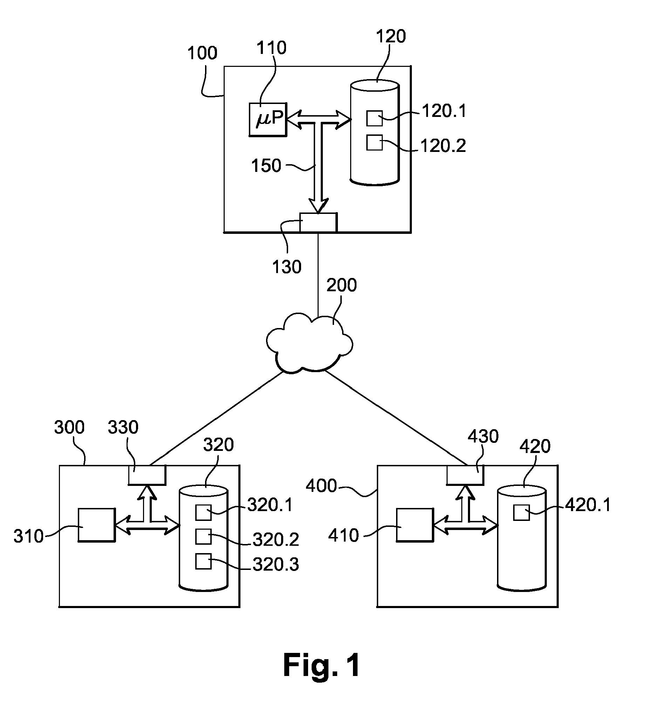

La figure 1 montre un dispositif serveur 100 d'analyse. Le serveur de d'analyse comporte :

- un microprocesseur 110 ;
- des moyens de stockage 120, par exemple un disque dur qu'il soit local ou distant, qu'il soit simple ou en grille (par exemple RAID) ;
- une interface 130 de communication, par exemple une carte de communication selon le protocole Ethernet. D'autres protocoles sont envisageables comme IP, « Fibre Channel » ou InfiniBand.

Le microprocesseur 110 du serveur de supervision, les moyens 120 de stockage du serveur de supervision et l'interface 130 de communication du serveur de supervision sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de la dite application. Ces principes sont applicables que le dispositif soit réel ou virtuel.

La figure 1 montre que les moyens de stockage du serveur d'analyse comportent :

- une zone 120.1 d'analyse comportant des codes instructions correspondant à une mise en oeuvre du procédé selon l'invention ;
- une zone 120.2 d'enregistrement de données d'exploitation.

La zone 120.2 d'enregistrement de données d'exploitation est, une zone structurée dans laquelle une sonde enregistre des données qu'elle produit. Une sonde est un programme déployé sur un serveur pour produire des données d'exploitation. Ces données sont enregistrées de manière à pouvoir être associées à un paramétrage de sonde. Cette association est réalisée soit, par exemple, par un contenu de la zone d'enregistrement, soit, dans un autre exemple, par un nom de la zone. Dans ce dernier cas, la zone d'enregistrement des données d'exploitation est un fichier dont le nom comporte un identifiant de sonde. Dans cet autre exemple, la zone 120.2 comporte autant de fichier qu'il y a de sondes produisant des données d'exploitation.

Un paramétrage de sonde est un enregistrement qui décrit la sonde. En particulier il décrit une cible et un type. Une cible est, par exemple, une adresse d'un serveur ou un nom qualifié d'un serveur. Un type est un code prédéterminé correspondant à des données que devra produire la sonde. Un paramétrage de sonde comporte aussi des informations temporelles précisant la période d'activité de la sonde.

La figure 1 montre que le serveur 100 d'analyse est connecté à un réseau 200.

La figure 1 montre, connectée au réseau 200 :

- un serveur 300 de traitements comportant :

  - un microprocesseur 310 ;
  - des moyens de stockage 320 comportant :

    - une zone 320.1 comportant des codes instruction correspondant à des travaux;
    - une zone 320.2 de planification comportant des enregistrements de panification chaque enregistrement correspondant à un travail planifié. Un enregistrement de planification est aussi appelé une planification ;
    - une zone 320.3 journal des travaux comportant des enregistrements de travaux, chaque enregistrement de travail étant relié à un enregistrement de planification, et comportant au moins une information sur une exécution dudit travail, par exemple une date de démarrage et/ou une date de fin;

  - une interface 330 de communication ;

- un serveur 400 de données comportant :

  - un microprocesseur 410 ;
  - des moyens de stockage 420 comportant :

    - une zone 420.1 comportant des codes instruction correspondant à un service de base de données;

  - une interface 430 de communication ;

La figure 1 illustre une architecture applicative comportant deux serveurs, un serveur de traitements et un serveur de données, connectés à un réseau auquel est également connecté un serveur mettant en oeuvre le procédé selon l'invention. On note que le procédé selon l'invention pourrait aussi être mis en oeuvre par un des serveurs de l'architecture applicative.

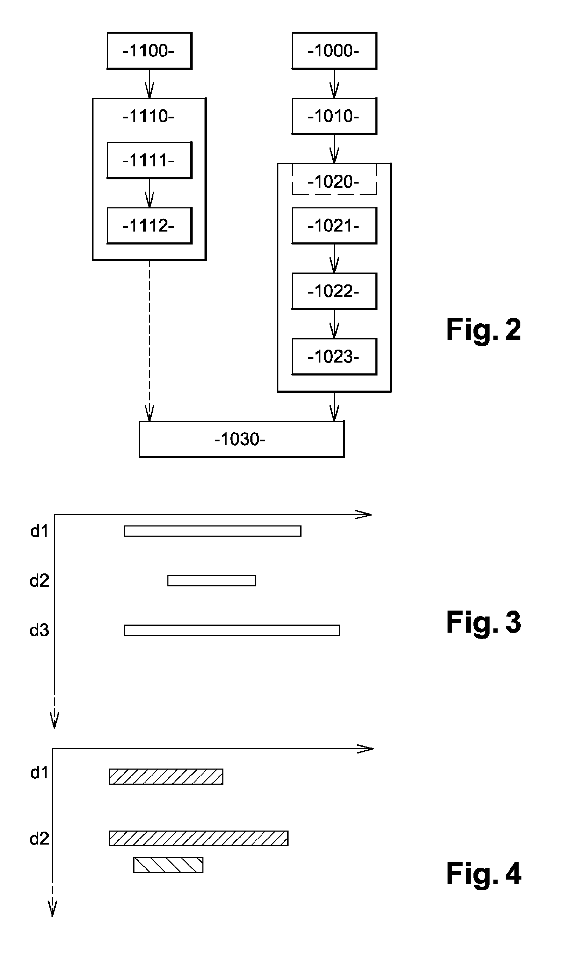

La figure 2 montre une étape 1000 de sélection d'au moins un travail parmi des travaux d'au moins un planificateur de travaux. Dans l'étape de sélection un utilisateur saisit, comme paramètre d'exécution, un ou plusieurs paramètres permettant de sélectionner un sous ensemble de travaux parmi une liste des travaux planifiés dans l'architecture applicative. C'est critère sont, par exemple et de manière non limitative :

- un identifiant d'un serveur sur lequel la planification est réalisée ;
- un identifiant d'un travail, étant admis que sur un serveur donnée, chaque travail planifié a un identifiant unique ;
- un nom de travail ;
- un horaire de planification ;
- un nom d'utilisateur, chaque travail s'exécutant dans un contexte utilisateur ;
- une date de création de la planification ;

Chacune des données de la liste précédente est une métadonnée d'un travail. Une métadonnée est une donnée qui fournit une information sur l'objet auquel elle est rattachée. Les administrateurs connaissent bien ces métadonnées. Dans une variante de l'invention on prévoit d'enrichir ces métadonnées en ajoutant des métadonnées relatives à une ressource. Par exemple telle planification a une affinité processeur élevé, et une affinité réseau basse. Cela signifie que l'on s'attend à ce que lors de l'exécution le travail consomme beaucoup de ressource processeur mais peu de ressource réseau.

Dans l'exemple le plus simple on fournit un identifiant de serveur et un identifiant de travail : par exemple l'identifiant du serveur de traitement et un nom de travail NT02512. Le nom est fictif et utilisé juste pour l'exemple.

Une fois en connaissance de ces paramètres on est capable de déterminer un sous ensemble de la zone de planification des moyens de stockage du serveur de traitement. Ce sous ensemble comporte toutes les planifications dont les métadonnées vérifient les paramètres d'exécution saisis. On obtient donc une sous liste de planifications.

Dans une autre étape 1010 de définition d'une période d'analyse, un utilisateur saisit, comme paramètre d'exécution, une période sur laquelle doit porter l'analyse. Per exemple l'utilisateur saisit une date de début et une date de fin d'analyse. Considérons dans un exemple une date de début valant 2013-07-01 et une date de fin valant 2013-07-31. Cela signifie que l'on souhaite faire une analyse sur le mois de juillet 2013.

Une fois les étapes 1000 de sélection d'au moins un travail et l'étape 1010 de définition d'une période d'analyse, on passe à une étape 1020 d'extraction de données de travail. Dans l'étape 1020, pour chaque planification de la sous liste de planifications, on effectue les actions suivantes :

- lecture 1021 du fichier de journal de planificateur correspondant à la planification ;
- filtrage 1022 du fichier de journal correspondant à la planification en fonction de la période d'analyse ;
- production et enregistrement 1023 d'un enregistrement de travail par exécution du travail pendant la période d'analyse.

Une fois les données de travail extraites, ou au fur et à mesure de leur extraction, on met en oeuvre une étape 1030 de calcul de coordonnées d'affichage d'une représentation du travail. On simplifie en parlant de coordonnée d'affichage du travail. Ce calcul prend en compte une date de référence, les date de début et de fin de travail ainsi que l'identifiant du travail. Dans une variant préférée, le calcul inclut le calcul du quotient d'une division entière de la durée du travail par un nombre prédéterminé. Par exemple si la durée du travail est exprimé en minute on aurait, par exemple :

$$\text{Coordonnées} = \text{fonction}(\text{identifiant}, (\text{fin} - \text{début}) / 1440)$$

1440 est le nombre de minutes dans une journée. Cela permet d'avoir un diagramme qui permet de visualiser une ligne par jour et par travail. Pour un travail on aurait un diagramme tel qu'illustré à la figure 3. Le diagramme de la figure 3, calculé par l'invention, met en évidence des différences de dates de démarrages et durées pour une même planification pour différents jours selon la période d'analyse sélectionnée. On met ainsi en évidence un problème car : pour une planification le travail devrait toujours commencer à la même date, le travail devrait avoir sensiblement la même durée. On est de plus en mesure d'identifier rapidement les jours les plus sensibles aux problèmes.

Un tel calcul aboutit à une représentation dont la surface est proportionnelle à la durée et dont la position est lié à la date de début et à l'identifiant de travail.

La figure 4 illustre un diagramme qui permet de visualiser des dates de démarrage et des durées pour deux travaux différents. On constate par exemple, grâce au diagramme de la figure 4, que la durée d'exécution d'un premier script est plus longue lorsqu'un deuxième script s'exécute en même temps.

On note qu'il y a plusieurs manières de réaliser une division entière, c'est-à-dire pour obtenir un résultat équivalent à celui d'une division entière. Parmi ces manières on cite au moins les suivants :

- Une division euclidienne effective d'une différence avec une date de référence par une valeur prédéterminé : (date - date référence) / valeur prédéterminée ;
- Utiliser des fonctions d'analyse de date pour extraire, par exemple, le jour.

Dans une variante avec données d'exploitation, l'invention, dans une étape 1100 de déploiement d'au moins une sonde, on copie sur un serveur cible des codes instructions selon un paramétrage d'au moins la sonde.
L'étape de déploiement est suivie d'une étape 1110 de collecte de données d'exploitations. Dans l'étape 1110 on effectue au moins deux actions :

- une étape 1111 de production de données d'exploitations ;
- une .étape 1112 d'enregistrement horodatés dans la zone 120.2 d'enregistrement des données d'exploitation produites, chaque enregistrement est associé à un paramétrage de sonde, par exemple par l'utilisation d'un identifiant pour chaque paramétrage de sonde. Dans la pratique une sonde est assimilé à son paramétrage et on emploie le terme sonde pour désigner le paramétrage, et les codes instructions copiés lors du déploiement.

Chaque sonde produit, par paramétrage, un type de donnée d'exploitation pour une cible prédéterminé. Un type donnée d'exploitation est, par exemple :

- taux d'utilisation CPU ;
- taux de CPU en mode attente ;
- volume de lecture/écriture disque ;
- volume de lecture/écriture réseau ;
- volume d'utilisation de la mémoire ;
- nombre de requêtes reçu par un service ;
- temps de réponse d'un service ;
- durée d'exécution d'une requête d'interrogation d'une base de données ;
- durée de traitement d'un message par un bus de service d'entreprise (ESB)
- ... la liste n'est pas exhaustive

Dans la variante avec données d'exploitation, à l'étape 1030 de calcul de coordonnées d'affichage, on calcul également des coordonnées d'affichage pour des données d'exploitation en fonction de la date de la donnée et de la sonde ayant produit la donnée.
Cela permet de juxtaposer des données d'exploitations avec des données de journaux de planificateurs, En particulier il est possible de juxtaposer des données d'exploitations d'une période, avec des données de journaux de planificateurs d'une période suivante. Par exemple on peut juxtaposer un volume d'entrée sortie d'une période de saisie avec des données de journaux de traitement de la période de traitement suivant la période de saisie. On peut ainsi visualiser l'influence d'une activité de saisie sur une activité de traitement.
Dans une autre variante de l'invention, chaque planification est associée à une ou plusieurs affinités ressources. Une affinité ressource est une mesure de l'influence d'une de la planification sur une ressource. On peut alors utiliser cette affinité dans au moins deux cas :

- automatiser un déploiement de sonde une fois au moins un travail sélectionné. On déploie alors les sondes correspondant aux affinités des travaux de la sous liste de travaux ;
- automatiser une sélection de données de ressource à juxtaposer avec des données de journaux de planificateur. On juxtapose alors des données d'exploitation produites par des sondes correspondant aux affinités des travaux de la sous liste de travaux.

Une affinité est une valeur numérique permettant de quantifier une influence. Une telle valeur peut être booléenne : 0 ou 1, ou un entier compris entre 1 et 5, ou entre 0 et 5, ou entre 1 et 10. Ces exemples sont non limitatifs. Cette affinité est associée à une ressource et à une planification.
Une affinité permet donc de filtrer des travaux et/ou des sondes associées à des ressources. Le filtrage se fait sur selon des seuils prédéterminés à comparer à des valeurs d'affinité ou d'une combinaison de valeurs d'affinité selon des opérateurs arithmétiques et/ou booléens.
Pour l'illustration, il est clair qu'une sonde produisant un taux d'utilisation de CPU a une affinité maximale avec le CPU.

**Revendications**

1. Procédé de production automatisée d'un diagramme d'analyse d'une activité de traitements planifiés **caractérisé en ce qu'**il comporte les étapes suivantes :

   - sélection d'au moins un travail parmi des travaux d'au moins un planificateur de travaux selon au moins un critère relatif à au moins une métadonnée associée aux travaux ;
   - définition d'une période d'analyse ;
   - extraction de données de travail d'au moins un journal de travaux du au moins un planificateur de travaux selon la période définie et selon le au moins un travail sélectionné, une donnée de travail comportant au moins une date de début de travail et une date de fin de travail ;
   - calcul de coordonnées d'affichage d'une représentation d'une donnée travail en fonction de sa date de début et de sa date de fin et, pour chacune desdites dates, selon un quotient d'une division entière d'un écart entre les dîtes dates et une date de référence par un nombre prédéterminé.

2. Procédé de production automatisé d'un diagramme selon la revendication 1 précédentes, **caractérisé en ce qu'**une métadonnée d'un travail comporte identifiant dudit travail.

3. Procédé de production automatisée d'un diagramme selon l'une des revendications précédentes, **caractérisé en ce qu'**une métadonnée d'un travail est une affinité avec une ressource matérielle d'un dispositif de traitement automatisé impliquée dans la mise en oeuvre du travail.

4. Procédé de production automatisée d'un diagramme selon l'une des revendications précédentes **caractérisé en ce qu'**il comporte également les étapes suivante :

   - déploiement d'au moins une sonde ;
   - collecte des données selon au moins la sonde déployée :

      - production de données d'exploitation pas la ou les sondes déployées ;
      - enregistrement horodaté et associé à un identifiant de sonde des données produites ;

   - calcul de coordonnées d'affichage d'une représentation d'une donnée d'exploitation enregistrée selon la date de la donnée d'exploitation et un identifiant de sonde.

5. Procédé de production automatisée d'un diagramme selon l'une des revendications précédentes, **caractérisé en ce qu'**une sonde à déployer est choisie en fonction d'une métadonnée d'au moins un travail parmi le ou les travaux sélectionnés.

6. Procédé de production automatisée selon l'une des revendications 4 ou 5, **caractérisé en ce que** la donnée d'exploitation enregistrée utilisée pour le calcul des coordonnées d'affichage est sélectionnée en fonction d'une métadonnée d'au moins un travail parmi le ou les travaux sélectionnés.

7. Dispositif de stockage numérique comportant un fichier correspondant à des codes instructions mettant en oeuvre le procédé selon l'une des revendications précédentes.

8. Dispositif mettant en oeuvre le procédé selon l'une des revendications 1 à 6.

**Fig. 1**

Fig. 2

Fig. 3

Fig. 4

Europäisches
Patentamt

European
Patent Office

Office européen
des brevets

**RAPPORT DE RECHERCHE EUROPEENNE**

Numéro de la demande

EP 15 18 4307

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/055817 A1 (NOBLE WILLIAM [US] ET AL) 3 mars 2011 (2011-03-03) * abrégé; figures 1-3,6-8 * * alinéas [0004] - [0007] * * alinéas [0020] - [0024] * * alinéas [0028] - [0033] * * phrase 47, alinéa 42 * * le document en entier * * figure 1 2 3 * ----- | 1-8 | INV. G06Q10/06 |
| X | US 2012/005597 A1 (EBERLEIN PETER [DE]) 5 janvier 2012 (2012-01-05) * abrégé; figures 3,5 * * alinéas [0004] - [0005] * * alinéas [0028], [0033] - [0035] * ----- | 1-8 | |
| X | ELMROTH E ET AL: "A User-Centric Cluster and Grid Computing Portal", PARALLEL PROCESSING, 2005. ICPP 2005 WORKSHOPS. INTERNATIONAL CONFEREN CE WORKSHOPS ON OSLO, NORWAY 14-17 JUNE 2005, PISCATAWAY, NJ, USA,IEEE, 14 juin 2005 (2005-06-14), pages 103-110, XP010820954, DOI: 10.1109/ICPPW.2005.18 ISBN: 978-0-7695-2381-1 * figures 1,2,3,5 * * pages 105-108 * ----- -/-- | 1-8 | DOMAINES TECHNIQUES RECHERCHES (IPC) G06Q G06F |

Le présent rapport a été établi pour toutes les revendications

| Lieu de la recherche | Date d'achèvement de la recherche | Examinateur |
|---|---|---|
| Munich | 13 janvier 2016 | Bauer, Rodolphe |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................
& : membre de la même famille, document correspondant

Europäisches
Patentamt

European
Patent Office

Office européen
des brevets

**RAPPORT DE RECHERCHE EUROPEENNE**

Numéro de la demande

EP 15 18 4307

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DANIELE CESINI ET AL: "WMSMonitor: A monitoring tool for workload and job lifecycle in Grids", GRID COMPUTING, 2008 9TH IEEE/ACM INTERNATIONAL CONFERENCE ON, IEEE, PISCATAWAY, NJ, USA, 29 septembre 2008 (2008-09-29), pages 209-216, XP031355199, ISBN: 978-1-4244-2578-5 * le document en entier * * figure 4 * | 1-8 | |
| A | ALEXANDER KELLER ET AL: "The CIM Metrics Model: Introducing flexible data collection and aggregation for performance management in CIM", IEEE TRANSACTIONS ON NETWORK AND SERVICE MANAGEMENT, IEEE, US, vol. 1, no. 2, 1 décembre 2004 (2004-12-01), pages 59-71, XP011253096, ISSN: 1932-4537 * le document en entier * | 4-6 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 13 janvier 2016 | Bauer, Rodolphe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 18 4307

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-01-2016

| Document brevet cité au rapport de recherche | Date de publication | Membre(s) de la famille de brevet(s) | Date de publication |
|---|---|---|---|
| US 2011055817 A1 | 03-03-2011 | AUCUN | |
| US 2012005597 A1 | 05-01-2012 | AUCUN | |

EPO FORM P0460

Pour tout renseignement concernant cette annexe : voir Journal Officiel de l'Office européen des brevets, No.12/82